# EUROPÄISCHE PATENTSCHRIFT

(11) **EP 3 577 123 B1**
(45) Veröffentlichungstag und Bekanntmachung des Hinweises auf die Patenterteilung: **15.04.2020**
(21) Anmeldenummer: 18703588.6
(22) Anmeldetag: 06.02.2018
(51) Int. Cl.: C07F 7/10, C07F 7/18

(54) **VERFAHREN ZUR HERSTELLUNG VON AMINOPROPYLALKOXYSILANEN**
METHOD FOR PREPARING AMINOPROPYLALKOXYSILANES
PROCÉDÉ POUR LA PRÉPARATION D'AMINOPROPYLALCOXYSILANES

(43) Veröffentlichungstag der Anmeldung: 11.12.2019
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE)
(74) Vertreter: Mai, Marit
(86) Internationale Anmeldenummer: PCT/EP2018/052942
(87) Internationale Veröffentlichungsnummer: WO 2019/154479

(56) Entgegenhaltungen:
- EP-A1- 0 578 186
- WO-A1-2013/139604
- HARRY R. ALLCOCK ET AL: "Organosilicon derivatives of phosphazenes. 11. Synthesis and reactivity of cyclotriphosphazenes bearing reactive silane functionalities: novel derivatives via hydrosilylation reactions", ORGANOMETALLICS, Bd. 10, Nr. 11, 1. November 1991 (1991-11-01), Seiten 3819-3825, XP55368650, US ISSN: 0276-7333, DOI: 10.1021/om00057a010
- DATABASE WPI Week 199241 Thomson Scientific, London, GB; AN 1992-337614 XP002785067, & JP H04 243883 A (CHISSO CORP) 31. August 1992 (1992-08-31)
- DATABASE WPI Week 199914 Thomson Scientific, London, GB; AN 1999-163210 XP002785068, & JP H11 21289 A (DOW CORNING TORAY SILICONE) 26. Januar 1999 (1999-01-26)
- DATABASE WPI Week 199914 Thomson Scientific, London, GB; AN 1999-163210 & JP H11 21289 A (DOW CORNING TORAY SILICONE) 26 January 1999 (1999-01-26)
- SAAM J C ET AL: "Preparation of 3-Triethoxysilylpropylamine and 1,3-Bis(aminopropyl)tetramethyldisiloxane" , JOURNAL OF ORGANIC CHEMISTRY, AMERICAN CHEMICAL SOCIETY, US, vol. 24, 1 January 1959 (1959-01-01), pages 119-120, XP002463541, ISSN: 0022-3263, DOI: 10.1021/JO01083A612

## Beschreibung

Die Erfindung betrifft die Herstellung von primären 3-Aminopropylalkoxysilanen über eine Hydrosilylierung in Gegenwart von Rhodium- oder Iridium-Verbindungen.

Primäre 3-Aminopropylalkoxysilane sind wichtige Zwischenprodukte in der Technik, sie eignen sich insbesondere für die Endstopperung von hydroxyfunktionellen Siloxanen unter Bildung von endständig-funktionalisierten Aminoalkylsiloxanen, den sogenannten Aminölen.

Endständig mit einer primären 3-Aminopropylgruppe funktionalisierte Polysiloxane, sog. Aminöle, finden in vielen Bereichen der Siliconchemie Anwendung, z. B. bei der Herstellung von Copolymeren. Damit Copolymere mit hohen Molekulargewichten hergestellt werden können, müssen die Aminöle möglichst vollständig endfunktionalisiert sein. Aber auch bei weiteren Anwendungen mindert eine unvollständige Endfunktionalisierung die Qualität, da an den nicht gestopperten Si-OH Kettenenden Kettenabbauprozesse einsetzen.
Äquilibrierungsverfahren unter Verwendung von Bis-3-amino-propyldisiloxanen liefern nur Aminöle mit unvollständig umgesetzten Kettenenden, während mit Stopperungsverfahren unter Verwendung von 3-Aminopropylalkoxysilanen, wie in DE102015207673 A1 und EP2841489 B1 beschrieben, vollständige Stopperungen erzielt werden können, weswegen sich nur 3-Aminopropylalkoxysilane für die Aminölproduktion eignen.

In der EP2828270 A1 ist eine Methode zur Herstellung von 3-Aminopropylalkoxysilanen aus den entsprechenden 3-Chlorpropylalkoxysilanen und einem 20- bis 30-fachen molaren Überschuss an Ammoniak beschrieben. Dieses Verfahren ist aufgrund der hohen Druckanforderungen verhältnismäßig aufwändig. Ein weiterer Nachteil bei diesem Verfahren ist, dass die als Edukte eingesetzten 3-Chlorpropylsilane über Platin-katalysierte Hydrosilylierung von Allylchlorid hergestellt werden müssen, bei der infolge einer Nebenreaktion, der Propenabspaltung, nur mäßige Ausbeuten erzielt werden können.
Ein einfaches und druckloses Verfahren, welches die 3-Aminopropylalkoxysilane in guten Ausbeuten und in einer hohen Reinheit liefert, steht daher noch aus.

Harry R. Allcock et al. (Organometallics 1991, 10 (11), 3819-3825) offenbart ein Verfahren zur Herstellung von (3-Aminopropyl)dimethylethoxysilan ausgehend von N-(trimethylsilyl)allylamin und Dimethylethoxysilan in Gegenwart eines Platinkatalysators. Es ist jedoch die Entfernung der Trimethylsilylgruppe erforderlich, um das Produkt zu erhalten, und es wird nur eine Ausbeute von 68 % erreicht.

Gegenstand der Erfindung ist ein Verfahren zur Synthese von 3-Aminopropylalkoxysilanen der allgemeinen Formel I

**H₂N-CR²R³-CHR¹-CH₂-SiR⁴R⁵(OR⁶)** **I,**

bei dem Silazane, die ausgewählt werden aus den allgemeinen Formeln **IVa** und **IVb** 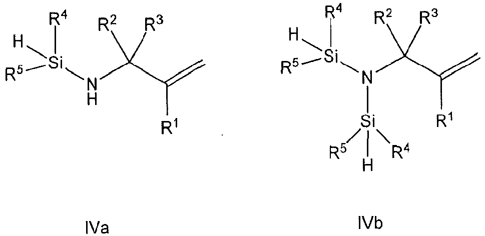 und Gemischen davon, in Gegenwart von Katalysator **A** hydrosilyliert werden, der Verbindungen enthält, die ausgewählt werden aus Rhodium- und Iridium-Verbindungen und Gemischen davon, und zur Überführung in die 3-Aminopropylalkoxysilane der allgemeinen Formel **I** mit Alkohol der allgemeinen Formel **V**

**R⁶-OH** **V**

umgesetzt werden, wobei
- **R¹** bis **R³**: unabhängig voneinander ein Wasserstoffatom oder einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder N**R^{x}** ersetzt sein können, und wobei die Reste über Kohlenwasserstoffreste verbrückt sein können, bedeuten,
- **R⁴** und **R⁵**: unabhängig voneinander einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder N**R^{x}** ersetzt sein können, und wobei die Reste über Kohlenwasserstoffreste verbrückt sein können,
- **R⁶**: Kohlenwasserstoffrest mit 1 bis 8 C-Atomen, wobei nicht benachbarte Kohlenstoffatome durch Sauerstoffe ersetzt sein können, und
- **R^{x}**: einen einwertigen unsubstituierten oder substituierten C₁-C₂₀-Kohlenwasserstoffrest, wobei einzelne nicht benachbarte Methyleneinheiten im Kohlenwasserstoffrest durch Gruppen-O-, -CO-, -COO-, -OCO- oder -OCOO-, -S- ersetzt sein können, und wobei die Reste über Kohlenwasserstoffreste verbrückt sein können,
bedeuten.

Das erfindungsgemäße Verfahren ist drucklos und einfach durchführbar und liefert die gewünschten Aminopropylalkoxysilane mit einer primären Aminogruppe in guten Ausbeuten mit nur geringen Anteilen (ca. 2 bis 4 %) an dem isomeren Produkt, dem sogenannten β-Produkt **Ia.**

**H₂N-CR²R³-CMeR¹-SiR⁴R⁵(OR⁶)** **Ia**

Ein weiterer Vorteil des Verfahrens ist, dass zur Herstellung des Silazangemisches der allgemeinen Formeln **IVa** und **IVb** kostengünstige Ausgangsmaterialien wie Allylamin und Dimethylchlorsilan verwendet werden können und keine weiteren Reagentien erforderlich sind.

In der EP 0578186 ist die intramolekulare Hydrosilylierung von Diallylaminen mit Rhodium-Katalysatoren unter Bildung von 5-Ring-Silazanen beschrieben. Über dieses Verfahren können keine 3-Aminopropylalkoxysilane mit einer primären Aminogruppe erzeugt werden, da der Stickstoff irreversibel durch eine nicht entfernbare Alkylgruppe blockiert ist.
DE 3546376 beschreibt außerdem die Umsetzung von Gemischen aus Monosilazan **IVa** und Bissilazan **IVb** (erhältlich nach DE 3606262) mit Platin-Katalysator und die nachfolgende Hydrolyse zu Disiloxanen, welche jedoch als Isomerengemische vorliegen; daher wird in DE 3546376 empfohlen, für die Hydrosilylierung nur das Monosilazan einzusetzen, dessen Herstellung in reiner Form jedoch schwierig und aufwändig ist, da es sich in das Bissilazan und Allylamin umwandeln kann.
In keiner der beiden Schriften wird die Herstellung von 3-Aminopropylalkoxysilanen beschrieben, die - wie oben ausgeführt - für die Aminölherstellung besonders geeignet sind. Auf der Basis der offenbarten Schriften ist es daher unerwartet, dass die Rhodium-katalysierte Hydrosilylierung des Monosilazan-Bissilazangemisches zu einem im Wesentlichen einheitlichen 3-Aminopropylalkoxysilan der allgemeinen Formel I mit nur geringen Anteilen an isomerem β-Produkt der allgemeinen Formel **Ib** führt.

Im Verfahren können die Silazane der allgemeinen Formeln **IVa** und **IVb** in jedem Verhältnis eingesetzt werden. Es können auch reine Silazane der allgemeinen Formeln **IVa** oder **IVb** eingesetzt werden. Bevorzugt ist der Einsatz eines Gemisches, das 10 bis 80 Gew.-%, insbesondere 20 bis 60 Gew.-% Silazan der allgemeinen Formel **IVa** enthält, bezogen auf die Summe an Silazanen der allgemeinen Formeln **IVa** und **IVb.**

Bevorzugt bedeuten **R¹** bis **R³** unabhängig voneinander ein Wasserstoffatom oder einen einwertigen unsubstituierten oder substituierten C₁-C₆-Kohlenwasserstoffrest, wobei einzelne nicht benachbarte Methyleneinheiten im Kohlenwasserstoffrest durch Gruppen N**R^{x}** ersetzt sein können.

Bevorzugt bedeuten **R⁴** und **R⁵** unabhängig voneinander einen einwertigen unsubstituierten oder substituierten C₁-C₆-Kohlenwasserstoffrest, wobei einzelne nicht benachbarte Methyleneinheiten im Kohlenwasserstoffrest durch Gruppen -O- oder N**R^{x}** ersetzt sein können.
Bevorzugt bedeutet **R⁶** Kohlenwasserstoffrest mit 1 bis 4 C-Atomen, wobei nicht benachbarte Kohlenstoffatome durch Sauerstoffe ersetzt sein können.
Bevorzugt bedeutet **R^{x}** einen einwertigen unsubstituierten oder substituierten C₁-C₆-Kohlenwasserstoffrest.

Bevorzugte Substituenten an **R¹** bis **R⁵** sind Halogene, insbesondere Fluor-, Chlor- oder Bromreste oder Cyanoreste.

Besonders bevorzugt bedeuten **R²** und **R³** unabhängig voneinander ein Wasserstoffatom oder eine Methylgruppe.
Besonders bevorzugt bedeutet **R¹** ein Wasserstoffatom.
Besonders bevorzugt bedeuten **R⁴** und **R⁵** unabhängig voneinander einen einwertigen unsubstituierten C₁-C₆-Kohlenwasserstoffrest, insbesondere Methyl-, Ethyl-, *n*-Propyl oder *i*-Propylgruppe. Besonders bevorzugt bedeutet **R⁶** eine Methyl-, Ethyl-, *n*-Propyl oder *i*-Propylgruppe.

Besonders bevorzugt bedeutet **R^{x}** einen einwertigen unsubstituierten C₁-C₆-Kohlenwasserstoffrest, insbesondere Methyl-, Ethyl-, *n*-Propyl oder *i*-Propylgruppe.

Die Hydrosilylierung wird in Gegenwart eines Katalysators **A** durchgeführt, der Verbindungen enthält, die ausgewählt werden aus Rhodium- und Iridium-Verbindungen und Gemischen davon. Bevorzugt enthält **A** eine oder mehrere Rhodium- oder Iridium-Verbindungen, die komplexierende Liganden tragen. Besonders bevorzugt sind Rh- oder Iridiumkomplexe, welche 4- oder 6-fach koordiniert sein können.

Als Liganden sind Halogenid, Wasserstoff, BF₄⁻, Acetylacetonato, mono- oder bidentate N-, P-, As- oder Sb-, N-heterocyclische Carben- oder Alkenylliganden und Kohlenmonoxid bevorzugt.

Insbesondere bevorzugte Liganden sind Chlor, Brom, Iod, Wasserstoff, Acetat, Carboxylat, Acetylacetonato, R^{y}₃P oder (R^{y}O)₃P, wobei **R^{y}** bevorzugt die Bedeutung C1-C20-Alkyl, C5-C20-Aryl, C6-C20-Aralkyl, CO, oder C2-C20-Alkenyl aufweist.

Beispiele für die Komponente **A** sind die folgenden Rhodiumverbindungen:
[Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O₂), Rh(CO)₂(C₅H₇O₂), RhRhCl₃[(R)₂S]₃, (R^{y}₃P)₂Rh(CO)X, (R^{y}₃P)₃Rh(CO)H, RhCl(PPh₃)₃, RhBr(PPh₃)₃, RhBr(PPh₃)₃, RhCl(PHPh₂)₃, RhCl[P(Benzyl)₃]_{3,} RhCl(SbPh₃)₃, RhBF₄(Cyclooctadien)₂, RhH(PPh₃)₃, RhCl(CO)(PPh₃)₂, RhI(CO)(PPh₃)₂, RhCl(CO)(PEt₃)₂, RhH(CO)(PPh₃)₂, RhCl(CO)(C₈H₁₄)₂, RhCl(1,5-Cyclooctadien), RhCl(CO)₂(acac), RhCl(1,5-Cyclooctadien)(acac), RhCl₃, [RhCl(C₂H₄)₂]₂, [ RhCl(1,5-Cyclooctadien)]₂, [RhCl(CO)₂]₂ oder Rh₄(CO)₁₂, wobei R^{y} die vorstehenden Bedeutungen aufweist.

Weitere Beispiele für die Komponente **A** sind Iridium-Verbindungen, wie Ir(OOCCH₃)₃, Ir(C₅H₇O₂)₃, [Ir(Z)(En)₂]₂ und [Ir(Z)(Dien)]₂, wobei **Z** gleich Chlor, Brom, Iod oder Alkoxy, **En** gleich Olefin, wie Ethylen, Propylen, Buten, Cyclohexen und Cycloocten und Dien gleich Cyclooctadien bedeutet. Bevorzugte Iridiumkatalysatoren sind chlorobis(cyclooctane)iridium(I) dimer, Chlorobis(1,5-cyclooctadiene)iridium(I) dimer und Iridium(III)acetylacetonat.

Die Verbindung **A** kann auch in geträgerter Form, beispielsweise auf SiO₂ oder Kohlenstoff eingesetzt werden.
Die Rhodium- oder Iridiumverbindung wird bevorzugt in Mengen von mindestens 0,1 ppm und höchstens 20000 ppm, besonders bevorzugt in Mengen von mindestens 1 ppm und höchstens 2000 ppm, ganz besonders bevorzugt in Mengen von mindestens 10 ppm und höchstens 500 ppm an Rhodium oder Iridium (bezogen auf das Element) bezogen auf das eingesetzte Silazangemisch eingesetzt.

Bevorzugt wird die Hydrosilylierung in einem inerten Lösemittel durchgeführt.
Bevorzugte Lösemittel sind aromatische Kohlenwasserstoffe wie Toluol oder Xylol, oder aliphatische Kohlenwasserstoffe wie Cyclohexan, Heptan oder Octan, welche auch als Gemische vorliegen können.
Weitere Lösemittel bei der Hydrosilylierung sind chlorierte Kohlenwasserstoffe, wie z. B. 1,2-Dichlorethan oder Dichlormethan, Ether wie z. B. Methyl-tert.-butylether, Diethylether oder Ethylenglycoldimethylether.
Das Lösemittel wird bevorzugt in Anteilen von mindestens 1 Gew. % bis höchstens 10000 Gew. %, besonders bevorzugt in Anteilen von mindestens 10 Gew. % und höchstens 1000 Gew.%, ganz besonders bevorzugt in Anteilen von mindestens 30 % und höchstens 500 % bezogen auf die Gewichtsmenge des Silazangemisches bestehend aus den allgemeinen Formeln **IVa** und **IVb** eingesetzt.

Die Hydrosilylierung wird bevorzugt bei Temperaturen von mindestens 20°C und höchstens 250°C, besonders bevorzugt von mindestens 50°C und höchstens 200°C, ganz besonders bevorzugt von mindestens 80°C und höchstens 150°C durchgeführt.

Vorzugsweise wird hydrosilylierte Mischung nicht isoliert sondern mit Alkohol der allgemeinen Formel **V** umgesetzt.

Bei der Alkoholyse der hydrosilylierten Mischung wird im Wesentlichen das 3-Aminopropylalkoxysilan und als weiteres Produkt ein Alkoxysilan R⁶OSiR⁴R⁵H erhalten, welches aus der Alkoholyse der Verbindung **Vb** oder weiteren am Stickstoff bissilylierten linearen Silazanen resultiert. Dieses kann auf destillativem Weg jedoch sehr leicht abgetrennt werden, da es einen deutlich niedrigeren Siedepunkt besitzt als die Verbindung der allgemeinen Formel **I.**

Vorzugsweise findet die Alkoholyse der hydrosilylierten Mischung ohne Aufarbeitung und Abtrennung von Bestandteilen der Mischung statt.

Eine weitere Steigerung der Wirtschaftlichkeit kann dadurch erzielt werden, dass die zur Hydrosilylierung eingesetzten Silazane, die ausgewählt werden, aus den allgemeinen Formeln **IVa** und **IVb,** hergestellt werden durch Umsetzung von olefinischem Amin der allgemeinen Formel **II**

**H₂N-CR²R³-CHR¹=CH₂** **II**

mit Chlorsilan der allgemeinen Formel **III**

**ClSiR⁴R⁵H** **III,**

wobei **R¹, R², R³, R⁴** und **R⁵** die vorstehenden Bedeutungen und bevorzugten Bedeutungen aufweisen.

Es fällt dabei ein Gemisch aus Monosilazan der allgemeinen Formel **IVa** und Bissilazan der allgemeinen Formel **IVb** an. Dieses Gemisch kann direkt ohne aufwändige Auftrennung der beiden Silazane in die nachfolgende Hydrosilylierung und Umsetzung mit Alkohol unter Bildung von 3-Aminopropylalkoxysilanen der allgemeinen Formel **I** eingesetzt werden. Das Verfahren kann daher besonders wirtschaftlich als Eintopfreaktion ausgeführt werden.

Es wurde jedoch überraschend gefunden, dass bei Einsatz von mindestens 2 Äquivalenten olefinischem Amin der allgemeinen Formel **II,** insbesondere Allylamin, bezogen auf Chlorsilan der allgemeinen Formel **III,** insbesondere Dimethylchlorsilan bei der Umsetzung zweiphasige flüssige Gemische gebildet werden, deren untere Phase das Hydrochlorid des Amins der allgemeinen Formel **II** und Amin mit nur sehr geringen Anteilen an Silazanen (< 1 Gew. %) enthält, und deren obere Phase im Wesentlichen das Silazangemisch der allgemeinen Formel **IVa** und der allgemeinen Formel **IVb** und kleinen Mengen Amin der allgemeinen Formel **II,** insbesondere Allylamin im Bereich von 10 Gew. % enthält. Die obere Phase ist zudem weitgehend frei von Chlorid.
Dadurch kann das für die nachfolgende Hydrosilylierung eingesetzte Silazangemisch durch einfache Phasentrennung gewonnen werden. Ein weiterer Vorteil ist, dass das olefinische Amin der allgemeinen Formel **II,** insbesondere Allylamin aus der unteren Phase durch Umsetzung mit einer Base, z.B. wässriger Natronlauge, vollständig und auf einfache Weise zurückgewonnen werden kann.

Bevorzugt wird bei diesem Verfahren ein molarer Überschuss an olefinischem Amin der allgemeinen Formel **II** bezogen auf das Chlorsilan der allgemeinen Formel **III** eingesetzt, besonders bevorzugt werden mindestens 1,5 Äquivalente und höchstens 20 Äquivalente an Amin der allgemeinen Formel **II** bezogen auf das Chlorsilan der allgemeinen Formel **III** eingesetzt, ganz besonders bevorzugt werden mindestens 2 Äquivalente und höchstens 10 Äquivalente Allylamin der allgemeinen Formel **II** bezogen auf das Chlorsilan der allgemeinen Formel **III** eingesetzt. Bei dieser Ausführungsform wird ein flüssiges zweiphasiges Gemisch ohne Feststoffanteile erhalten, dessen obere Phase das Gemisch der Silazane der allgemeinen Formeln **IVa** und **IVb** und geringe Anteile des Amins der allgemeinen Formel **II** enthält und dessen untere Phase das Hydrochlorid des Amins gelöst in dem Amin enthält. Dabei ist die untere Phase (Salzphase) praktisch frei von Silanen.

Es ist daher möglich, das für die Hydrosilylierung benötigte Silazangemisch der allgemeinen Formeln **IVa** und **IVb,** welches die obere Phase bildet, über eine einfache Phasentrennung abzutrennen und - gegebenenfalls nach einer Abreicherung des überschüssigen Amins der allgemeinen Formel **II,** beispielsweise durch Strippen - das nicht-umgesetzte Amin der allgemeinen Formel **II** durch Destillation abzureichern.
Amin der allgemeinen Formel **II** kann aus der unteren Phase quantitativ durch Zugabe von mindestens molaren Mengen an einer Base, beispielsweise wässriger Natronlauge und Destillation zurückgewonnen und wiedereingesetzt werden.

Die Herstellung des Silazangemischs der allgemeinen Formeln **IVa** und **IVb** wird bevorzugt bei Temperaturen von mindestens 0°C, besonders bevorzugt von mindestens 20°C und ganz besonders bevorzugt bei mindestens 30°C durchgeführt, und bevorzugt höchstens bei 150°C, besonders bevorzugt bei höchstens 100°C, ganz besonders bevorzugt bei höchstens 60°C ausgeführt. In einer bevorzugten Ausführungsform wird das Amin der allgemeinen Formel **II** vorgelegt und das Chlorsilan der allgemeinen Formel **III** zugegeben.
Die Herstellung des Silazangemischs der allgemeinen Formeln **IVa** und **IVb** kann mit oder ohne Lösemittel durchgeführt werden.
Falls Lösemittel eingesetzt werden, sind die bei der Hydrosilylierung beschriebenen Lösemittel bevorzugt.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1

664 g (11,6 mol) Allylamin werden unter Inertgas in einem 2l Rundkolben mit KPG-Rührer und Rückflusskühler vorgelegt und langsam innerhalb von ca. 2 Std. mit 472 g (5,00 mol) Dimethylchlorsilan versetzt. Man lässt auf Umgebungstemperatur abkühlen und trennt die Phasen. Das Gewicht der abgetrennten oberen Phase beträgt 502 g, das Gewicht der abgetrennten unteren Phase 616 g.
Zusammensetzung der Phasen (GC-Flächen %):
a) untere Phase (GC der in MTBE löslichen Anteile): < 1 % Silane, > 99 % Allylamin (Allylaminhydrochlorid wird nicht erfasst)
b) obere Phase (GC in MTBE): 13 % Allylamin, 38 % Monosilazan **IVa,** 48 % Disilazan **IVb.**
Die obere Phase enthält ca. 17 ppm Chlorid (bestimmt über Ionenchromatographie).
Die obere Phase wird bei einer Badtemp. von 115°C andestilliert. Dabei werden 34 g Allylamin zurückgewonnen. Das im Sumpf verbleibende Silazangemisch enthält noch ca. 4 % Allylamin.

### Beispiel 2 (Rückgewinnung von Allylamin)

60 g der unteren Phase aus Beispiel 1 werden mit einer Lösung aus 25 g NaOH und 78 g Wasser versetzt und die erhaltene Lösung wird über eine Füllkörperkolonne destilliert. Bei einer Kopftemp. von 63°C erhält man 43 g reines Allylamin.

### Beispiel 3 (Hydrosilylierung)

60 g der andestillierten oberen Phase aus Beispiel 1 [Zusammensetzung: 28 Gew.% (146 mmol) Monosilazan und 64 Gew.% (222 mmol) Disilazan] werden in 120 ml Toluol gelöst und mit 5,5 mg Bis-(1,5-cyclooctadien)-dirhodium-(I)-dichlorid (Anteil Rh ca. 41 %, entspricht ca. 40 ppm Rh bezogen auf das Silazangemisch) in 1,5 ml Xylol versetzt. Man erhitzt auf 110°C, wobei die Mischung zu sieden beginnt. Nach einer Gesamtreaktionszeit von 60 Min. lässt man erkalten, versetzt mit 19 g Methanol und lässt über Nacht bei Raumtemp. stehen.
Anschließend wird fraktioniert und im Vakuum bei einem Druck von 80 mbar destilliert. Man erhält 39 g (264 mmol, 72%) 3-Aminopropyldimethylmethoxysilan mit ca. 2-4 % 1-Methyl-2-aminoethyldimethylmethoxysilan.

### Beispiel 4 (Hydrosilylierung)

Der Versuch wird analog Beispiel 3 mit 33 ppm Bis-(1,5-cyclooctadien)-dirhodium-(I)-dichlorid durchgeführt. Es werden 38 g 3-Aminopropyldimethylmethoxysilan erhalten.

### Beispiel 5

Es werden analog zu Beispiel 2 Versuche mit den folgenden weiteren Hydrosilylierungskatalysatoren (jeweils 50 ppm Rh) durchgeführt, welche zu vergleichbaren Produktausbeuten führen: Tris-(triphenylphosphin)-rhodium(I)-chlorid, Dichloro-tetraethylene-dirhodium(I), Acetylacetonato(1,5-cyclooctadien)-rhodium(I) 99% [12245-39-5], Chlorodicarbonylrhodium(I)dimer, Carbonylchlorobis-(triphenylphosphin)-rhodium(I), Rhodium(III)-chlorid-hydrat.

## Patentansprüche

1. Verfahren zur Synthese von 3-Aminopropylalkoxysilanen der allgemeinen Formel I
**H₂N-CR²R³-CHR¹-CH₂-SiR⁴R⁵(OR⁶)** **I,**
bei dem Silazane, die ausgewählt werden aus den allgemeinen Formeln **IVa** und **IVb** 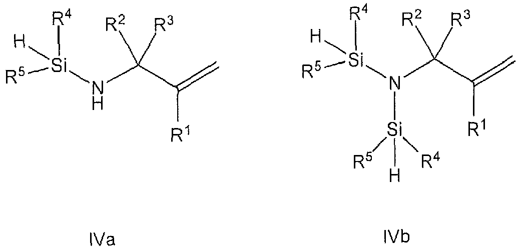 und Gemischen davon, in Gegenwart von Katalysator A hydrosilyliert werden, der Verbindungen enthält, die ausgewählt werden aus Rhodium- und Iridium-Verbindungen und Gemischen davon,
und zur Überführung in die 3-Aminopropylalkoxysilane der allgemeinen Formel **I** mit Alkohol der allgemeinen Formel **V**
**R⁶-OH** **V**
umgesetzt werden, wobei
**R¹** bis **R³** unabhängig voneinander ein Wasserstoffatom oder einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder N**R^{x}** ersetzt sein können, und wobei die Reste über Kohlenwasserstoffreste verbrückt sein können, bedeuten,
**R⁴** und **R⁵** unabhängig voneinander einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder N**R^{x}** ersetzt sein können, und wobei die Reste über Kohlenwasserstoffreste verbrückt sein können,
**R⁶** Kohlenwasserstoffrest mit 1 bis 8 C-Atomen, wobei nicht benachbarte Kohlenstoffatome durch Sauerstoffe ersetzt sein können, und
**R^{x}** einen einwertigen unsubstituierten oder substituierten C₁-C₂₀-Kohlenwasserstoffrest, wobei einzelne nicht benachbarte Methyleneinheiten im Kohlenwasserstoffrest durch Gruppen-O-, -CO-, -COO-, -OCO- oder -OCOO-, -S- ersetzt sein können, und wobei die Reste über Kohlenwasserstoffreste verbrückt sein können,
bedeuten.

2. Verfahren nach Anspruch 1, bei dem **R¹** ein Wasserstoffatom bedeutet.

3. Verfahren nach einem oder mehreren der vorangehenden Ansprüche, bei dem **R²** und **R³** unabhängig voneinander ein Wasserstoffatom oder eine Methylgruppe bedeuten.

4. Verfahren nach einem oder mehreren der vorangehenden Ansprüche, bei dem **R⁴** und **R⁵** unabhängig voneinander einen einwertigen unsubstituierten C₁-C₆-Kohlenwasserstoffrest bedeuten.

5. Verfahren nach einem oder mehreren der vorangehenden Ansprüche, bei dem **R⁶** einen Kohlenwasserstoffrest mit 1 bis 4 C-Atomen bedeutet.

6. Verfahren nach einem oder mehreren der vorangehenden Ansprüche, bei dem der Katalysator **A** Verbindungen enthält, die ausgewählt werden aus Rh- und Iridiumkomplexen, welche 4- oder 6-fach koordiniert sind.

7. Verfahren nach Anspruch 6, bei dem die Rh- und Iridiumkomplexe Liganden aufweisen, die ausgewählt werden aus Halogenid, Wasserstoff, BF₄⁻, mono- oder bidentaten N-, P-, As- oder Sb-, N-heterocyclischen Carben- oder Alkenylliganden und Kohlenmonoxid.

8. Verfahren zur Synthese von 3-Aminopropylalkoxysilanen der allgemeinen Formel I
**H₂N-CR²R³-CHR¹-CH₂-SiR⁴R⁵(OR⁶)** **I,**
bei dem in einem ersten Schritt olefinisches Amin der allgemeinen Formel **II**
**H₂N-CR²R³-CHR¹=CH₂** **II**
mit Chlorsilan der allgemeinen Formel **III**
**ClSiR⁴R⁵H** **III,**
umgesetzt wird,
wobei ein Silazangemisch der allgemeinen Formeln **IVa** und **IVb** 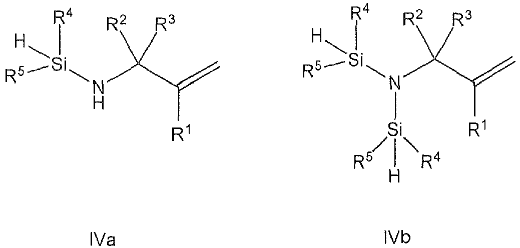 gebildet wird,
in einem zweiten Schritt das Silazangemisch der allgemeinen Formeln **IVa** und **IVb** in Gegenwart von Katalysator **A,** der Verbindungen enthält, die ausgewählt werden aus Rhodium- und Iridium-Verbindungen und Gemischen davon, hydrosilyliert wird,
und zur Überführung in die 3-Aminopropylalkoxysilane der allgemeinen Formel **I** mit Alkohol der allgemeinen Formel **V**
**R⁶-OH** **V**
umgesetzt wird, wobei
**R¹** bis **R³** unabhängig voneinander ein Wasserstoffatom oder einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder NR^{x} ersetzt sein können, und wobei die Reste über Kohlenwasserstoffreste verbrückt sein können, bedeuten,
**R⁴** und **R⁵** unabhängig voneinander einen einwertigen unsubstituierten oder substituierten C₁-C₂₀-Kohlenwasserstoffrest, wobei einzelne nicht benachbarte Methyleneinheiten im Kohlenwasserstoffrest durch Gruppen -O-, -CO-, -COO-, -OCO- oder -OCOO-, -S- oder N**R^{x}** ersetzt sein können, und wobei die Reste über Kohlenwasserstoffreste verbrückt sein können,
**R⁶** Kohlenwasserstoffrest mit 1 bis 8 C-Atomen, wobei nicht benachbarte Kohlenstoffatome durch Sauerstoffe ersetzt sein können, und
**R^{x}** einen einwertigen unsubstituierten oder substituierten C₁-C₂₀-Kohlenwasserstoffrest, wobei einzelne nicht benachbarte Methyleneinheiten im Kohlenwasserstoffrest durch Gruppen - O-, -CO-, -COO-, -OCO- oder -OCOO-, -S- ersetzt sein können, und wobei die Reste über Kohlenwasserstoffreste verbrückt sein können,
bedeuten.

9. Verfahren nach Anspruch 8, bei dem im ersten Schritt mindestens 2 Mol-Äquivalente olefinisches Amin der allgemeinen Formel **II,** bezogen auf Chlorsilan der allgemeinen Formel **III** eingesetzt werden, wobei das bei der Umsetzung gebildete zweiphasige flüssige Gemisch, dessen untere Phase das Hydrochlorid des Amins der allgemeinen Formel **II** enthält und dessen obere Phase das Silazangemisch der allgemeinen Formeln **IVa** und **IVb** enthält, vor dem zweiten Schritt durch Phasentrennung aufgetrennt wird.

## Claims

1. Method for synthesizing 3-aminopropylalkoxysilanes of the general formula I
**H₂N-CR²R³-CHR¹-CH₂**-**SiR⁴R⁵(OR⁶)** **I,**
in which silazanes, selected from the general formulae **IVa** and **IVb** 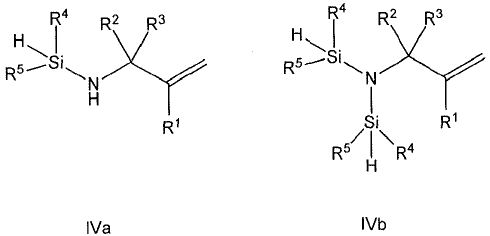 and mixtures thereof, are hydrosilylated in the presence of catalyst **A,** which contains compounds selected from rhodium and iridium compounds and mixtures thereof,
and, for conversion to the 3-aminopropylalkoxysilanes of the general formula **I,** are reacted with alcohol of the general formula **V**
**R⁶-OH** **V,**
where
**R¹** to **R³** independently of one another are a hydrogen atom or a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S- or N**R^{x}** groups, and where the radicals may be bridged by hydrocarbon radicals,
**R⁴** and **R⁵** independently of one another are a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S- or N**R^{x}** groups, and where the radicals may be bridged by hydrocarbon radicals,
**R⁶** is a hydrocarbon radical having 1 to 8 carbon atoms, where non-adjacent carbon atoms may be replaced by oxygens, and
**R^{x}** is a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S-groups, and where the radicals may be bridged by hydrocarbon radicals.

2. Method according to Claim 1, in which **R¹** is a hydrogen atom.

3. Method according to one or more of the preceding claims, in which **R²** and **R³** independently of one another are a hydrogen atom or a methyl group.

4. Method according to one or more of the preceding claims, in which **R⁴** and **R⁵** independently of one another are a monovalent unsubstituted C₁-C₆ hydrocarbon radical.

5. Method according to one or more of the preceding claims, in which **R⁶** is a hydrocarbon radical having 1 to 4 carbon atoms.

6. Method according to one or more of the preceding claims, in which the catalyst **A** contains compounds selected from Rh and iridium complexes that are 4-coordinate or 6-coordinate.

7. Method according to Claim 6, in which the Rh and iridium complexes have ligands selected from halide, hydrogen, BF₄⁻, mono- or bidentate N, P, As or Sb, N-heterocyclic carbene or alkenyl ligands, and carbon monoxide.

8. Method for synthesizing 3-aminopropylalkoxysilanes of the general formula I
**H₂N-CR²R³**-**CHR¹-CH₂-SiR⁴R⁵(OR⁶)** **I,**
in which, in a first step, olefinic amine of the general formula **II**
**H₂N-CR²R³-CHR¹=CH₂** **II**
is reacted with chlorosilane of the general formula **III**
**ClSiR⁴R⁵H** **III,**
where a silazane mixture of the general formulae **IVa** and **IVb** 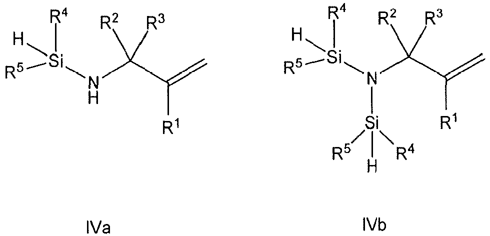 is formed,
in a second step, the silazane mixture of the general formulae **IVa** and **IVb** is hydrosilylated in the presence of catalyst A, which contains compounds selected from rhodium and iridium compounds and mixtures thereof,
and, for conversion to the 3-aminopropylalkoxysilanes of the general formula **I,** is reacted with alcohol of the general formula **V**
**R⁶-OH** **V,**
where
**R¹** to **R³** independently of one another are a hydrogen atom or a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S- or N**R^{x}** groups, and where the radicals may be bridged by hydrocarbon radicals,
**R⁴** and **R⁵** independently of one another are a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S- or N**R^{x}** groups, and where the radicals may be bridged by hydrocarbon radicals,
**R⁶** is a hydrocarbon radical having 1 to 8 carbon atoms, where non-adjacent carbon atoms may be replaced by oxygens, and
**R^{x}** is a monovalent unsubstituted or substituted C₁-C₂₀ hydrocarbon radical, where individual, non-adjacent methylene units in the hydrocarbon radical may be replaced by -O-, -CO-, -COO-, -OCO- or -OCOO-, -S-groups, and where the radicals may be bridged by hydrocarbon radicals.

9. Method according to Claim 8, in which, in the first step, at least 2 mole equivalents of olefinic amine of the general formula **II,** based on chlorosilane of the general formula **III,** are used, where the biphasic liquid mixture formed during the reaction, the lower phase of which contains the hydrochloride of the amine of the general formula **II** and the upper phase of which contains the silazane mixture of the general formulae **IVa** and **IVb,** is separated by phase separation prior to the second step.

## Revendications

1. Procédé pour la synthèse de 3-aminopropylalcoxysilanes de formule générale I
H₂N-CR²R³-CHR¹-CH₂-SiR⁴R⁵(OR⁶) I,
dans lequel des silazanes, qui sont choisis parmi les formules générales IVa et IVb 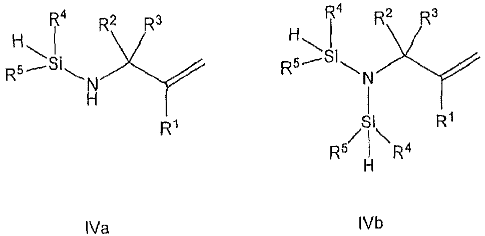 et leurs mélanges, sont hydrosilylés en présence d'un catalyseur A, qui contient des composés qui sont choisis parmi les composés à base de rhodium et d'iridium et leurs mélanges,
et qui, pour la transformation en 3-aminopropylacoxysilanes de formule générale I, sont transformés avec un alcool de formule générale V
R⁶-OH V
dans lesquelles
R¹ à R³ signifient, indépendamment l'un de l'autre, un atome d'hydrogène ou un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- ou NR^{x} et les radicaux pouvant être pontés via des radicaux hydrocarbonés,
R⁴ et R⁵ signifient, indépendamment l'un de l'autre, un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- ou NR^{x} et les radicaux pouvant être pontés via des radicaux hydrocarbonés,
R⁶ signifie un radical hydrocarboné comprenant 1 à 8 atomes de carbone, des atomes de carbone non adjacents pouvant être remplacés par oxygène, et
R^{x} signifie un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- et les radicaux pouvant être pontés via des radicaux hydrocarbonés.

2. Procédé selon la revendication 1, dans lequel R¹ signifie un atome d'hydrogène.

3. Procédé selon l'une ou plusieurs des revendications précédentes, dans lequel R² et R³ signifient, indépendamment l'un de l'autre, un atome d'hydrogène ou un groupe méthyle.

4. Procédé selon l'une ou plusieurs des revendications précédentes, dans lequel R⁴ et R⁵ signifient, indépendamment l'un de l'autre, un radical hydrocarboné monovalent, non substitué, en C₁-C₆.

5. Procédé selon l'une ou plusieurs des revendications précédentes, dans lequel R⁶ signifie un radical hydrocarboné comprenant 1 à 4 atomes de carbone.

6. Procédé selon l'une ou plusieurs des revendications précédentes, dans lequel le catalyseur A contient des composés qui sont choisis parmi les complexes à base de rhodium et d'iridium, qui sont tétracoordonnés à hexacoordonnés.

7. Procédé selon la revendication 6, dans lequel les complexes à base de rhodium et d'iridium présentent des ligands qui sont choisis parmi halogénure, hydrogène, BF₄⁻, les ligands monodentates ou bidentates à base de N, P, As ou Sb, carbène N-hétérocyclique ou alcényle et le monoxyde de carbone.

8. Procédé pour la synthèse de 3-aminopropylalcoxysilanes de formule générale I
H₂N-CR²R³-CHR¹-CH₂-SiR⁴R⁵(OR⁶) I,
dans lequel, dans une première étape, une amine oléfinique de formule générale II
H₂N-CR²R³-CHR¹=CH₂ II
est transformée avec du chlorosilane de formule générale III
ClSiR⁴R⁵H III
un mélange de silazanes des formules générales IVa et IVb 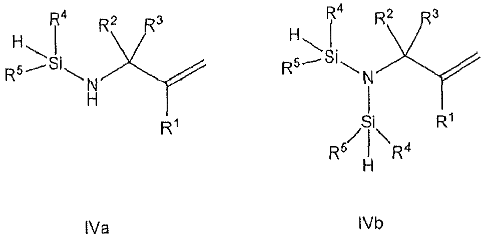 étant formé,
dans une deuxième étape, le mélange de silazanes des formules générales IVa et IVb est hydrosilylé en présence d'un catalyseur A, qui contient des composés qui sont choisis parmi les composés à base de rhodium et d'iridium et leurs mélanges,
et qui, pour la transformation en 3-aminopropylacoxysilanes de formule générale I, sont transformés avec un alcool de formule générale V
R⁶-OH V
dans lesquelles
R¹ à R³ signifient, indépendamment l'un de l'autre, un atome d'hydrogène ou un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- ou NR^{x} et les radicaux pouvant être pontés via des radicaux hydrocarbonés,
R⁴ et R⁵ signifient, indépendamment l'un de l'autre, un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- ou NR^{x} et les radicaux pouvant être pontés via des radicaux hydrocarbonés,
R⁶ signifie un radical hydrocarboné comprenant 1 à 8 atomes de carbone, des atomes de carbone non adjacents pouvant être remplacés par oxygène, et
R^{x} signifie un radical hydrocarboné monovalent, non substitué ou substitué, en C₁-C₂₀, différents motifs méthylène non adjacents dans le radical hydrocarboné pouvant être remplacés par des groupes -O-, -CO-, -COO-, -OCO- ou -OCOO-, -S- et les radicaux pouvant être pontés via des radicaux hydrocarbonés.

9. Procédé selon la revendication 8, dans lequel, dans une première étape, au moins 2 équivalents en mole d'amine oléfinique de formule générale II sont utilisés par rapport au chlorosilane de formule générale III, le mélange liquide à deux phases formé lors de la transformation, dont la phase inférieure contient le chlorhydrate de l'amine de formule générale II et dont la phase supérieure contient le mélange de silazanes des formules générales IVa et IVb, étant séparé par séparation des phases avant la deuxième étape.
